# EUROPÄISCHE PATENTSCHRIFT

(11) **EP 2 283 307 B1**
(45) Veröffentlichungstag und Bekanntmachung des Hinweises auf die Patenterteilung: **29.11.2017**
(21) Anmeldenummer: 09749382.9
(22) Anmeldetag: 13.05.2009
(51) Int. Cl.: G01B 11/02, B41F 33/14, B65H 7/14, B65H 5/24, B65H 9/20

(54) **OPTISCHE POSITIONSERKENNUNG**
OPTICAL POSITION DETECTION
DÉTECTION OPTIQUE DE POSITION

(30) Priorität: 21.05.2008 CH 766082008
(43) Veröffentlichungstag der Anmeldung: 16.02.2011
(73) Patentinhaber: Ferag AG, 8340 Hinwil (CH)
(72) Erfinder: MAEDER, Carl, Conrad, CH-8335 Hittnau ZH (CH)
(74) Vertreter: Rentsch Partner AG
(86) Internationale Anmeldenummer: PCT/CH2009/000156
(87) Internationale Veröffentlichungsnummer: WO 2009/140778

(56) Entgegenhaltungen:
- EP-A- 1 279 919
- WO-A-2007/085101
- WO-A1-00/47947
- DE-A1- 10 013 982
- DE-A1- 19 842 192
- DE-A1- 19 960 653
- DE-A1-102004 044 341
- DE-A1-102007 006 333
- DE-A1-102007 025 910
- JP-A- 10 258 502
- US-A- 2 645 343

## Beschreibung

Die vorliegende Erfindung fällt in das Gebiet der Weiterverarbeitung von bedruckten Produkten und betrifft ein Verfahren zur optischen Erkennung einer Position von Druckereierzeugnissen gemäss dem Oberbegriff des Patentanspruchs 1 sowie eine Vorrichtung zur optischen Erkennung einer Position von Druckereierzeugnissen gemäss Oberbegriff des Patentanspruchs 10.

Zur Sicherstellung einer gewünschten Qualität von Druckereierzeugnissen bei der Druckweiterverarbeitung ist die Bestimmung der Ausrichtung und/oder der Lageposition von Druckprodukten fallbedingt unabdingbar. Aufgrund der oft sehr hohen Verarbeitungskapazitäten von derzeit etwa 30.000 - 40.000 Exemplaren pro Stunde bei Hochleistungssystemen bieten berührungslose Kontrollsysteme gegenüber mechanischen oder elektromechanischen Kontrollsystemen bekanntlich Vorteile. Aus dem Stand der Technik sind mehrere optische Kontrollsysteme bekannt

In EP 0685420 B1 wird zum Beispiel vorgeschlagen, die Teilprodukte beim Zusammentragen einer optischen/elektronischen Kontrolle zu unterziehen, indem ein Bildaufnahmegerät oder ein Lesekopf jedes Teilprodukt oder einen Abschnitt davon synchron zum Fördertakt erfasst. Ein neben dem Bildaufnahmegerät angeordnetes Leuchtmittel sorgt dafür, dass das Teilprodukt oder dessen Abschnitt genügend erhellt ist. Die erfassten Daten werden in einer Bildverarbeitung elektronisch verarbeitet, indem sie mit einer zuvor eingelesenen Sollinformation beziehungsweise einem Eichbild verglichen werden. Fördert ein Anleger oder eine Zuführungsstation fehlerhafte oder fehlerhaft orientierte Teilprodukte an, so wird ein entsprechendes Steuer- oder Alarmsignal erzeugt Da es bei dieser Vorrichtung baubedingt nicht möglich ist, die Teilprodukte genau aus der Blickrichtung des Bildaufnahmegerätes in Form einer Kamera zu beleuchten, ist die Beleuchtung für die Erfassung durch das Bildaufnahmegerät nicht hundertprozentig ideal.

In der DE 10 2007 009 971 A1 sind ein Verfahren und eine Vorrichtung zur Bildaufnahme einer Kante eines bedruckten Bogens offenbart. Eine Bildaufnahmeeinrichtung und/oder eine Beleuchtungseinrichtung werden dabei parallel und synchron zum geförderten Bogen geführt. Die neben der Bildaufnahmeeinrichtung angeordnete Beleuchtungseinrichtung leuchtet dabei eine Bogenoberfläche derart aus, dass jede Bogenkante einen dunklen Schattenstreifen hervorruft. Ein von der Bildaufnahmeeinrichtung aufgenommenes Bild weist zwischen dem hellen Bogen und dem dunklen Schatten einen starken Kontrast auf, anhand welchem die Bogenkante mittels elektronischer Bildverarbeitung ermittelbar ist.

Die bekannten Kontrollverfahren haben den Nachteil, dass die erfassten Bilder zu verhältnismässig grossen Datenmengen führen, welche von einer Bildverarbeitungseinheit verarbeitet werden müssen. Da die dazu erforderlichen Vorrichtungen wie Bildaufnahmeeinrichtung, Bildverarbeitungseinheit und Datenleitung entsprechend leistungsfähig sein müssen, sind sie oft kostenintensiv.

In der DE 199 60 653 wird zur Detektion oder Lagebestimmung von Kanten von Gegenständen eine lichtschrankenartige Lichtquelle/Sensormittel-Anordnung verwendet, in der der durch die Lichtquelle erzeugte Lichtstrahl an einer Objektebene zu einer Lichtlinie fokussiert wird. Ferner sind Mittel zur Erzeugung einer Relativbewegung zwischen dem Lichtstrahl und zu detektierenden Kanten oder Gegenständen vorgesehen, derart, dass zu detektierende Kanten in der Objektebene bewegt werden und dabei parallel zur Lichtlinie ausgerichtet sind. Insbesondere zur Detektion von Kanten von transparenten Gegenständen sind Sensormittel in einem Empfangsbereich derart ausgerüstet, dass sie nicht nur Lichtintensitäten im Bereich der Achse des Lichtstrahles, sondern auch Intensitäten von Licht messen, das durch eine in der Objektebene positionierte Kante quer zur Lichtlinie aus dem Lichtstrahl ausgelenkt wird. Durch die optische lokale Redundanz in der Objektebene und/oder im Empfangsbereich wird eine höhere Präzision und eine geringere Fehleranfälligkeit bei der Detektion oder Lagebestimmung von Kanten erreicht.

Die JP 10 258502 Dieses Dokument offenbart eine Vorrichtung zur Detektion von Unordnung im Falzbereich von geförderten Produkten. Dazu wird entlang eines Fördermittels ein Detektionsmittel in Form einer Lichtschranke angeordnet, das über den Transportpfad hinaus ragende Produkte erfasst.

Aus der DE 10 2007 006333 sind ein Verfahren und eine Vorrichtung zur Erfassung der Lage und/oder der Form zumindest eines Abschnitts von bewegtem, flachem Bedruckstoff in einem Überwachungsbereich bekannt, bei dem Strahlung auf den Bedruckstoff gerichtet und erfasst wird. Die Strahlung wird im Wesentlichen parallel zur Fläche des Bedruckstoffs auf den Abschnitt des Bedruckstoffs gerichtet. Durch das Verfahren gemäss der DE 10 2007 006333, wird es möglich, in Druckmaschinen Wellen in transportierten Papierbogen zu erkennen und durch Änderung der Blasluftzufuhr zu Leitelementen zu verringern.

Die Erfindung gemäss der WO 00/47947 betrifft eine Anordnung zum berührungslosen optischen Erfassen der Kantenposition eines transparenten Objektes, insbesondere eines Kunststoffkörpers. Zur Erfassung der Kante des Objektes wird zwischen zwei gekreuzten Polarisatoren ein transparenter Kunststoffkörper durchgeführt und das einfallende Licht von dem transparenten Kunststoffkörper gedreht, so dass ein unter den gekreuzten Polarisatoren angeordneter Analysator das gedrehte Licht erfassen kann. Zwischen einem Sender und einem Empfänger liegt zumindest in Teilbereichen ein transparentes Material vor, das so ausgeführt ist, dass es die, von dem Sender ausgehende elektromagnetische Strahlung in ihrer Polarisationsrichtung verändern kann. Weiterhin sind zwischen Sender und Empfänger zwei gekreuzte Polarisationsfilter eingebracht. Geht nun von dem Sender eine elektromagnetisch Strahlung aus, so wird aus dieser Gesamtstrahlung durch den ersten Polarisationsfilter nur solches Licht durchgelassen, welches einer bestimmten, durch den Polarisationsfilter vorgegebenen Polarisationsrichtung entspricht. Beim Durchgang durch den transparenten Körper, der wiederum in der Lage ist, die Polarisationsrichtung zu drehen, erfahrt dieses Licht eine weitere Drehung seiner Polarisationsdrehung. Damit enthält dieses Licht jedoch Anteile, die durch den zweiten Polarisationsfilter, der senkrecht zum Ersten steht, hindurch gelangen können, so dass eine darunter angeordnete Empfängeranordnung ein Helligkeitssignal detektieren kann. Lichtanteile hingegen, die von der Strahlungsquelle durch den ersten Polarisationsfilter hindurch gelangen und an dem transparenten Körper vorbei laufen, können die zweite Polarisationseinrichtung nicht durchdringen. Entsprechend wird an der Empfängeranordnung an den Stellen, an denen elektromagnetische Strahlung detektiert werden kann unmittelbar die Kante des transparenten Objektes detektiert, wobei die Quantenposition des Gegenstandes sich unmittelbar aus der Grenze zwischen dem belichteten und nichtbelichteten Empfangerteilen anhand der Signalpegeländerung auf der Empfängeranordnung ermitteln lässt.

In der WO 00/47947 wird also das in seiner Polarisationsrichtung veränderte Durchlicht zur Kartenerkennung genutzt.

Aus der U S2645343 aus dem Jahr 1953 ist eine Vorrichtung zum photoelektrischen Prüfen und Sortieren von Nüssen bekannt. Die Vorrichtung umfasst ein lichtdurchlässiges Fördermittel, mindestens eine Lichtquelle und mindestens einer photo-elektrische Zelle, mit einer PhotoZellen Anode und Kathode welche in einem lichtdichten Gehäuse angeordnet sind.

Die DE 10 2007 025 910 A1 beschreibt ein Verfahren zur Überwachung des von einer Rotationsdruckmaschine erzeugten Druckbildes, welches die Abtastung von bedruckten Bereichen des Bedruckstoffes innerhalb eines Abtastbereiches mit einem Sensorsystem und die Beaufschlagung zumindest von Teilbereichen des Abtastbereiches mit erster elektromagnetischer Strahlung von einem Beleuchtungselement aus umfasst. Die elektromagnetische Strahlung ist dabei homogen und es wird ein transparenter Bedruckstoff verwendet, wobei die erste elektromagnetische Strahlung von der dem Sensorsystem abgewandten Seite des Bedruckstoffes aus durch den Bedruckstoff hindurch auf den Abtastbereich gelenkt wird.

Es ist eine Aufgabe der vorliegenden Erfindung, die bestehenden Verfahren und Vorrichtung weiter zu entwickeln.

Die der Erfindung für das Verfahren zugrunde liegende Aufgabe wird mit den Merkmalen des Patentanspruchs 1 gelöst. Weitere Ausführungsformen sind Gegenstand der abhängigen Patentansprüche 2 bis 9.

Die der Erfindung für die Vorrichtung zugrunde liegende Aufgabe wird mit den Merkmalen des Patentanspruchs 10 gelöst. Weitere Ausführungsformen sind Gegenstand der abhängigen Patentansprüche 11 bis 15.

Das Verfahren zeichnet sich dadurch aus, dass die flächigen Druckereierzeugnisse mit einem Fördermittel entlang einer Förderstrecke an mindestens einer homogenisierten Kontrastlichtquelle und mindestens einem optischen Sensor vorbei geführt werden, wobei die Druckereierzeugnisse zwischen Kontrastlichtquelle und optischem Sensor hindurchgeführt werden, wobei eine erste Seite des Druckereierzeugnisses von der homogenisierten Kontrastlichtquelle derart angestrahlt wird, dass jeweils ein Schattenbild des Druckereierzeugnisses entsteht, welches vom optischen Sensor erfasst wird. Unter Druckereierzeugnissen werden nachfolgend sowohl einzelne Druckereierzeugnisse, als auch Gruppen von mehreren Druckereierzeugnissen verstanden. Dabei umfassen die Druckereierzeugnisse mindestens je ein flächiges, flexibles Druckprodukt beziehungsweise Druckereiprodukt, welches seinerseits ein Hauptprodukt und/oder mindestens ein Teilprodukt umfassen kann. Ebenso kann dabei ein Druckereierzeugnis, oder können mehrere Druckereierzeugnisse und/oder ein Druckprodukt oder mehrere Druckprodukte in einen Umschlag gesteckt sein.

Die Bezeichnung Kontrastlichtquelle bezeichnet in der vorliegenden Beschreibung einen Ort, von welchem Kontrastlicht direkt auf eine erste Seite der Druckereierzeugnisse gelangt. Für die vorliegende Erfindung ist es nicht von Bedeutung, ob das Kontrastlicht von einem oder mehreren Leuchtmitteln oder mittels Umwandlung des von diesem Leuchtmittel bzw. diesen Leuchtmitteln ausgehenden Lichtes erzeugt wurde, beispielsweise durch eine Homogenisierung. Wenn das vom Leuchtmittel ausgestrahlte Licht indirekt, beispielsweise über mindestens einen Umlenkspiegel zur ersten Seite der Druckereierzeugnisse gelangt, bildet derjenige Umlenkspiegel die Kontrastlichtquelle, von welchem aus das Licht direkt auf die ersten Seite der Druckereierzeugnisse gelangt und so das eigentliche Kontrastlicht bildet. Als Leuchtmittel können beispielsweise Leuchtstoffröhren dienen.

Unter Position eines Druckereierzeugnisses wird nachfolgend sowohl eine Relativposition des Druckereierzeugnisses bezüglich einem Fördermittel als auch eine Relativposition eines Druckereierzeugnisses bezüglich einem weiteren Druckereierzeugnis, beispielsweise einem nachfolgenden Druckereierzeugnis verstanden.

Ein Vorteil des erfindungsgemässen Verfahrens liegt darin, dass im Vergleich zu konventionellen optischen Erfassungssystemen keine Probleme mit Streulicht auftreten, welche eine anschliessende Datenverarbeitung beeinträchtigen und/oder erschweren.

Ein weiterer Vorteil liegt darin, dass das erfindungsgemässe Verfahren selbst bei dicken Druckereierzeugnissen eine gute Positionserkennung ermöglicht ist. Unter dem Begriff "Dicke" wird dabei das Mass verstanden, welches sich typischerweise durch die Anzahl Seiten des Druckereierzeugnissen ergibt, wobei sich die Dicke im vorliegenden Fall ungefähr in Richtung einer Aufnahmerichtung des optischen Sensors erstreckt. Die gute Positionserkennung zeichnet sich dadurch aus, dass selbst dann eine falsche Position beziehungsweise falsche Lage eines Bestandteils des Druckereierzeugnisses erkennbar ist, beispielsweise eines eingesteckten Teilproduktes, wenn sich dieser Bestandteil vergleichsweise nahe bei einer vom optischen Sensor abgewandten Seite des Druckereierzeugnisses befindet. Im Vergleich dazu haben herkömmliche Kontrollverfahren, bei denen jede Kante des Druckereierzeugnisses einen dunklen Schattenstreifen hervorruft, bei vergleichbaren Konditionen Mühe mit einer zuverlässigen Fehlpositionserkennung.

Gemäss der vorliegenden Erfindung wird eine erste Seite der Druckereierzeugnisse von der Kontrastlichtquelle derart angestrahlt, dass jeweils ein Schattenbild entsteht, bei dem das betreffende Druckereierzeugnis als dunkler Schatten auf dem ansonsten hellen Hintergrund abgebildet ist und die Kontur dieses Druckereierzeugnisses wiedergibt. Der hell-dunkel-Kontrast im Bereich der Kontur wird durch den optischen Sensor erfasst und je nach Bedarf für eine anschliessende Bildverarbeitung weiterverwendet. Je nach Anforderung an das Verfahren oder die Vorrichtung entspricht die Kontur einer Projektion des Druckereierzeugnisses auf eine Ebene, wobei diese Ebene nicht zwingend plan sein muss.

Falls eine Erhöhung des Kontrastes im Schattenbild erforderlich sein sollte, wie beispielsweise im Bereich der Kontur des Druckerzeugnisses oder bestimmten Abschnitten davon erforderlich ist, werden gewisse Bereiche des Druckereierzeugnisses wie beispielsweise eine Kante und/oder eine Ecke und /oder mehrere Ecken zusätzlich mit Kontrastlicht angestrahlt. Eine zusätzliche Kontrastlichtquelle umfasst je nach Bedarf beispielsweise einen Halogen-Spot, einen Leuchtdioden-Spot, einen Energiespar-Spot, einen Xenon-Blitz, aus Lichtwellenleitern ausgelöstes Licht oder eine beliebige Kombination davon.

Die Kontrastlichtquelle strahlt gemass der Erfindung homogenisiertes Kontrastlicht auf das Druckereierzeugnis aus. Eine Homogenisierung ist beispielsweise mittels Lichtreflektoren oder einer Vielzahl von verschiedenen und/oder unterschiedlich starken Leuchtmitteln erreichbar.

Erfindungsgemäss ist das Fördermittel lichtdurchlässig, so dass die Druckereierzeugnisse zumindest partiell durch die Fördermittel hindurch von der Kontrastlichtquelle angestrahlt werden. In einer Ausführungsform umfassen die Fördermittel eine Vielzahl von Förderabteilen. Diese Förderabteile sind dazu in einer Ausführungsform perforiert, wobei die Perforation insbesondere im Bereich des kontrastreichen Bildausschnittes angeordnet ist. Es versteht sich von selbst, dass die Löcher der Perforation dazu nicht zwingend kreisrund sein müssen, sondern einen beliebigen Querschnitt und eine beliebige Grösse aufweisen können, solange sie ihre Aufgabe wahrnehmen können. In einer weiteren Ausführungsform des Fördermittels (mit oder ohne Förderabteilen) weist dieses anstelle von Perforationen lediglich Vertiefungen auf, welche den Lichtdurchtritt ermöglichen.

Je nach Anforderungen an das Fördermittel weist dieses eine oder gar mehrere Kombinationen der oben genannten Merkmale bzw. Elemente auf. In einer weiteren Ausführungsform des Fördermittels, beispielsweise eines Förderbandes oder Greifers ist dieses aus einem transluzenten und/oder transparenten Material gefertigt, wobei unter "transparent" für den vorliegenden Einsatzzweck nicht zwingend eine völlige Lichtdurchlässigkeit verstanden werden soll.

Allen soeben genannten Fördermitteln ist gemeinsam, dass sie ein Bewegen der Druckereierzeugnisse entlang einer Förderstrecke vorbei an mindestens einer Kontrastlichtquelle und mindestens einem optischen Sensor ermöglichen, wobei die Kontrastlichtquelle und der optische Sensor auf gegenüberliegenden Seiten der Druckereierzeugnisse angeordnet sind. Dadurch wird insbesondere bezüglich des Verfahrens die bei konventionellen optischen Erfassungen auftretende Streulichtproblematik ausgeschlossen oder zumindest erheblich minimiert.

Bei einer Ausführungsform des Verfahrens werden die Fördermittel lediglich teilweise zwischen der Kontrastlichtquelle und dem optischen Sensor hindurchgeführt. Dies erlaubt beispielsweise die Verwendung von konventionellen Klammergreifern als Fördermittel, welche typischerweise lichtundurchlässig sind, ohne dass vom allgemeinen Erfindungsgedanken abgewichen werden muss.

Falls die Erfassung des Schattenbildes durch den optischen Sensor taktgebunden ist und nicht dauernd zu verarbeitende Aufnahmen liefert, kann eine damit verbundene, bildverarbeitende Einheit datenmässig beträchtlich entlastet werden. Dies erlaubt die Bilderfassung und -weiterbearbeitung mit einer leistungsbeschränkten Intelligenz und somit den Einsatz sogenannt "schlanker", das heisst leistungsbeschränkter Komponenten. Der Takt der optischen Erfassung ist dabei je nach Einsatzzweck variierbar, so dass er unabhängig von Beschleunigungen und/oder Verzögerungen des Fördermittels ist.

In einer Ausführungsform des Verfahrens wird nur ein kontrastreicher Bildausschnitt des vom optischen Sensor erfassten Schattenbildes weiterverwendet. Im kontrastreichen Bildausschnitt ist dabei ein kontrastintensiver, einem Randbereich eines bezüglich einer vordefinierten Soll-Peripherie korrekt zusammengestellten und korrekt abgelegten Druckereierzeugnisses entsprechender Ausschnitt des abgeglichenen Schattenbildes zu erwarten. Aus diesem Grund wird der kontrastreiche Bildausschnitt auch Sollkontrastbereich genannt. Durch die voreinstellbare Selektion des kontrastreichen Bildausschnitts, welcher im Verhältnis zum ganzen, vom optischen Sensor aufgenommenen Bild vergleichsweise klein ist, wird die weiterzuverarbeitende Datenmenge beträchtlich reduziert. Kleine Datenmengen bieten den Vorteil, dass sie in der Regel den Einsatz von kostengünstigeren Elementen wie Datenleitungen, Speicher, Bildverarbeitungseinheiten usw. erlauben, als dies bei grossen Datenmengen der Fall ist. In einer Ausführungsform des Verfahrens ist der kontrastreiche Bildausschnitt mit einer Art elektronischer Maske realisiert, welche alle sich ausserhalb des kontrastreichen Bildausschnitts bzw. Sollkontrastbereichs befindenden Bildpunkte herausfiltert und für die anschliessende Bildverarbeitung entfernt. Je nach Möglichkeit erfolgt das Herausfiltern bereits in der Steuereinheit des optischen Sensors. Anschliessend gelangt der kontrastreiche Bildausschnitt dann typischerweise per CCD- (Charge Coupled Device) oder per APS (aktiver Pixelsensor) zu einer digitalen Schnittstelle, beispielsweise einer Schnittstelle nach IEEE 1394-Standard, um in einer Bildverarbeitungseinheit weiterbearbeitet beziehungsweise ausgewertet zu werden. Das Ergebnis der Positionserkennung wird je nach Anforderung als digitales und/oder analoges Signal ausgegeben, welches je nach Bedarf als binäres oder wertmässiges Signal erzeugbar ist. Im letzteren Fall enthält das Signal beispielsweise dem erfassten Druckereierzeugnis innewohnende weitere Informationen wie beispielsweise dessen Format, welche für die Weiterbehandlung des erfassten Druckproduktes nutzbar sind. In einer Ausführungsform wird beispielsweise aus dem Schattenbild ein elektronisches Abbild der Kontur des jeweiligen Druckereierzeugnisses extrahiert. Je nach Bedarf wird das Signal auch als Grundlage für einen Entscheid über das weitere Vorgehen mit dem betreffenden Druckereierzeugnis verwendet. Je nach Bedarf ist eine Sonderbehandlung beispielsweise ein Ausscheiden oder Umleiten bestimmter Druckereierzeugnisse anhand vorbestimmter Kriterien wie Format, Grösse und/oder Form oder einer Kombination davon. In einer Ausführungsform werden die betreffenden Druckereierzeugnisse vom endlosen Fördermittel nicht ausgeschieden sondern durchlaufen im Sinn einer Sonderbehandlung die Förderstrecke ein weiteres Mal, um beispielsweise ein Nachbessern von fehlerhaften Druckereierzeugnissen zu ermöglichen. Dieses Nachbessern erfolgt je nach Bedarf manuell, automatisiert oder teilautomatisiert. Den vorgenannten Fällen ist gemeinsam, dass das Signal ein Steuersignal bildet. Das Ausscheiden erfolgt in einem solchen Anwendungsfall bedarfsweise bereits in oder nach der Förderstrecke des Fördermittels. In einer weiteren Ausführungsform wird das Signal/Steuersignal einer Maschinensteuerung oder -regelung zugeführt, welche über den weiteren Verlauf der Verarbeitung der fehlerhaften Druckereierzeugnisse entscheidet.

In einer Ausführungsform beinhaltet eine Einheit mit dem optischen Sensor, beispielsweise eine Videokamera oder eine Digitalkamera, die Bildverarbeitungseinheit, welche die Kontur des Druckerzeugnisses errechnet. In einer weiteren Ausführungsform übernimmt diese Einheit auch die Prüfung, ob es sich beim erfassten Druckerzeugnis um ein korrekt oder um ein fehlerhaft zusammengestelltes und positioniertes Druckereierzeugnis handelt.

Die Vorrichtung ist in Anspruch 10 beansprucht. Sie zeichnet sich dadurch aus, dass sie Fördermittel zum Transportieren/Fördern der Druckereierzeugnisse entlang einer Förderstrecke vorbei an mindestens einer homogenisierten Kontrastlichtquelle und mindestens einem optischen Sensor aufweist, wobei Fördermittel, Kontrastlichtquelle und optischer Sensor derart angeordnet sind, dass die Druckereierzeugnisse zwischen dem Leuchtmittel und dem optischen Sensor durchführbar sind. Bezüglich der Vorteile wird auf die Beschreibung des Verfahrens verwiesen.

Das Fördermittel weist vorzugsweise eine Vielzahl von Förderabteilen auf, welche zur Aufnahme eines oder mehrerer Druckereierzeugnissen dienen. Bei weiteren Ausführungsformen weist das Fördemittel Auflageebenen, Greifer oder Taschen auf.

Bei Bedarf weist die erfindungsgemässe Vorrichtung mindestens einen zwischen der ersten Seite der Druckerzeugnisse und dem Leuchtmittel angeordneten Umlenkspiegel auf, welcher in diesem Fall die Kontrastlichtquelle bildet. Die damit erzeugte, indirekte Beleuchtung der Druckerzeugnisse erlaubt im Vergleich zu konventionellen, direkten Druckerzeugnis-Beleuchtungen eine kompaktere Bauweise der Vorrichtung, was nicht zuletzt aufgrund der oft knappen räumlichen Gegebenheiten beim Anwender solcher Vorrichtungen sehr erwünscht ist.

Bei einer weiteren Ausführungsform erfasst der optische Sensor das Schattenbild nicht direkt, sondern ebenfalls über mindestens einen Umlenkspiegel. Wie beim vorangegangenen Absatz betreffend das Kontrastlicht ist dadurch eine kompakte Bauweise der Vorrichtung erzielbar.

Der optische Sensor bzw. die optischen Sensoren sind je nach Anforderungen zumindest in einem Aufnahmebereich des optischen Sensors gegen Umgebungslicht abgeschirmt, beispielsweise mit einer lichtundurchlässigen Abschirmung. Versuche haben gezeigt, dass durch die Abschirmung der Kontrast des Schattenbildes im Vergleich zum Zustand ohne Abschirmung erhöht ist, was die Erfassung durch den/die Sensoren und eine Nachbearbeitung erleichtert.

Das vom optischen Sensor erfasste Schattenbild wird in einer weiteren Ausführungsform in ein abgeglichenes Schattenbild umgewandelt, sofern es über einen für die nachfolgende Bildverarbeitung ausreichenden Minimalkontrast verfügt. Unter abgeglichenem Schattenbild wird ein Schattenbild mit einer homogenisierten Helligkeit verstanden, weshalb das abgeglichene Schattenbild auch als homogenisiertes Schattenbild bezeichnet wird. Dazu wird mindestens ein Referenzbild eines geometrischen Ortes des Fördermittels, beispielsweise einem Förderabteil erfasst, welches zum Aufnahmezeitpunkt durch den optischen Sensor leer ist. Dieses Referenzbild wird mit dem vom optischen Sensor erfassten Schattenbild, welches bei einem korrekt zusammengestellten und korrekt positionierten Druckereierzeugnis entsteht, abgeglichen. Dem Fachmann ist klar, dass es sich beim Schattenbild nicht zwingend um eine ganze Ansicht eines Druckereierzeugnisses im oder auf dem Fördermittel handeln muss, sondern dass es sich dabei auch lediglich um einen teilweisen oder ausschnittweises Bild des ganzen Druckerzeugnisses im oder auf dem Fördermittel handeln kann. Der Helligkeitsabgleich erfolgt mit einer Homogenisierfunktion in der Bildverarbeitungseinheit, welche bei einer Ausführungsform durch einen Prozessor des optischen Sensors gebildet ist. Bei der Homogenisierfunktion wird jeweils ein Referenzbild vom einem ein Druckereierzeugnis repräsentierenden Schattenbild subtrahiert. Ein vom optischen Sensor erfasstes Bild weist typischerweise eine Vielzahl von Bildpunkten (Pixel) auf. Sind Bildpunkte mit denselben Koordinaten beim Referenzbild und beim Schattenbild dunkel, so wird dies auf dem abgeglichenen Schattenbild als heller Bildpunkt dargestellt. Ist ein Bildpunkt auf dem Referenzbild hell und im Schattenbild an derselben Koordinate dunkel, so resultiert dies auf dem abgeglichenen Schattenbild als dunkler Bildpunkt. Anstelle dunkler und heller Bildpunkte können auch schwarze beziehungsweise weisse Bildpunkte verwendet werden. Der Vorteil eines abgeglichenen Schattenbildes liegt darin, dass es von Vorteil lediglich schwarze und/oder weisse Bildpunkte umfasst und daher eine geringere Datenmenge aufweist, als ein vergleichbares Schattenbild mit Grauwerten. Dies ist sowohl für eine Zwischenspeicherung und insbesondere für die nachfolgende Bildbearbeitung, beispielsweise eine Konturerkennung, von Vorteil.

Während zur Darstellung eines Schwarz-Weiss-Bild-Pixels 1 Bit ausreicht, erfordert ein grauer Bildpixel typischerweise 8 Bit. Fehlt ein Druckereierzeugnis, so ist das abgeglichene Schattenbild beispielsweise gänzlich weiss.

Bei dünnen Druckereierzeugnissen, welche beispielsweise aus Einzelbögen und/oder transparentem oder teiltransparentem Material bestehen, konnten im Versuchsbetrieb keine ausreichender Minimalkontrast des erzielten abgeglichenen Schattenbildes erreicht werden. Indem mittels einer Differenzfunktion vorgängig zur Homogenisierung der Helligkeit zuerst eine Art Negativ des lichtdurchlässigen Druckerzeugnisses erzeugt wurde, sind im Versuchsbetrieb dennoch gute Kontrastwerte erreicht worden. Konkret wurde das Schattenbild, welches mit dem lichtdurchlässigen Druckerzeugnisses aufgenommen worden ist, vom Referenzbild - also dem Schattenbild ohne Druckereierzeugnis - subtrahiert. Das dadurch entstandene Differenzbild wurde anschliessend mit der oben beschriebenen Homogenisierfunktion in der Bildverarbeitungseinheit nachbearbeitet. Bei der Homogenisierfunktion wird in diesem Fall jeweils ein Referenzbild vom Differenzbild abgezogen, so dass eine Art Negativschattenbild entsteht. Die Bearbeitungsschritte der Differenzbildung und des Homogenisierens werden bei einer Ausführungsform durch einen Prozessor des optischen Sensors ausgeführt. Im Unterschied zur Homogenisierung wird durch die Differenzbildung und das anschliessende Homogenisieren im Vergleich zum "reinen" Homogenisieren ein Negativschattenbild erzeugt, welches dennoch über einen genügend grosses Kontrast zur Bildnachbearbeitung, beispielsweise eine Konturerfassung des Druckereierzeugnisses aufweist. Entsprechend wird dabei ein Bildpunkt, der auf dem Referenzbild hell und im Schattenbild des lichtdurchlässigen Druckerzeugnisses an derselben Koordinate ebenfalls hell ist, im Differenzbild als dunkler Bildpunkt dargestellt. Bei der anschliessend durchgeführten Homogenisierung der Helligkeit bleibt ein im Differenzbild dunkler Bildpunkt im Negativschattenbild ein dunkler Bildpunkt. Aufgrund der gleichartigen Bildverarbeitung wird in der vorliegenden Beschreibung denn auch nicht weiter zwischen einen abgeglichenen Schattenbild und einem Negativschattenbild unterschieden.

Anhand von Figuren, welche lediglich Ausführungsbeispiele darstellen, wird die Erfindung im Folgenden erläutert. Es zeigen
- Fig.1: eine vereinfachte Darstellung einer ersten Ausführungsform der erfindungsgemässen Vorrichtung in Seitenansicht;
- Fig. 2: eine vereinfachte Darstellung einer zweiten Ausführungsform in Seitenansicht;
- Fig. 3: eine vereinfachte Darstellung einer dritten Ausführungsform in Seitenansicht;
- Fig. 4: eine vereinfachte Darstellung der in Figur 1 gezeigten Vorrichtung mit einem korrekt positionierten Druckereierzeugnis und einem schlecht positionierten Druckerzeugnis im Seitenriss;
- Fig. 5: eine vereinfachte Darstellung der in Figur 4 gezeigten Vorrichtung in einer Ansicht von oben;
- Fig. 6: ein erstes Schattenbild, bei dem kein Druckereierzeugnis vorhanden ist;
- Fig. 7: ein zweites Schattenbild in der in Figur 6 gezeigten Darstellung 6, wobei ein Bereich zusätzlich ausgeleuchtet ist;
- Fig. 8: ein drittes Schattenbild in der in Figur 6 gezeigten Darstellung, jedoch mit einem korrekt positionierten Druckereierzeugnis; und
- Fig. 9: ein viertes Schattenbild in der in Figur 6 gezeigten Darstellung, jedoch mit einem schlecht positionierten Druckereierzeugnis;
- Fig. 10: eine bildliche Darstellung einer Homogenisierung der Helligkeit bei genügendem Kontrast eines Schattenbildes; und
- Fig. 11: eine bildliche Darstellung einer Homogenisierung der Helligkeit bei ungenügendem Kontrast eines vom optischen Sensor erzeugten Schattenbildes.

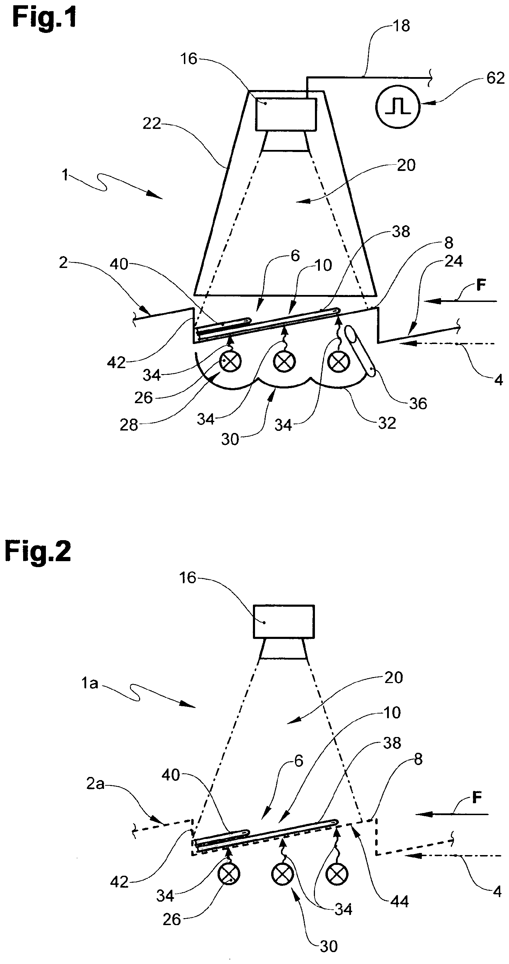

Die Figur 1 zeigt einen Ausschnitt in Seitenansicht eine erfindungsgemässe Vorrichtung 1 mit einem Fördermittel 2 mit einer Vielzahl hintereinander entlang einer Förderbahn 4 angeordneten Förderabteilen 6, wie sie beispielsweise aus der Anmeldung PCT 2007/000026 beziehungsweise der CH 1856/06 dieser Anmelderin bekannt sind. In der Figur 1 ist lediglich ein Förderabteil 6 ganz sichtbar dargestellt. Jedes Förderabteil 6 weist eine Auflagefläche 8 zur Entgegennahme mindestens eines flächigen Druckereierzeugnisses 10 aus einer Vielzahl von Druckerzeugnissen auf und dient zum Transport der Druckereierzeugnisse in eine Förderrichtung F. Die Auflageflächen 8 sind in der vorliegenden Ausführungsform aus einem Textilabschnitt gebildet und lichtdurchlässig beziehungsweise transluzent.

Je nach Ausführungsform der Vorrichtung 1 ist jedem Förderabteil 6 eine Haltevorrichtung zugeordnet, um das ihm zugeordnete Druckereierzeugnis 10 gegen die Auflagefläche 8 zu pressen, wodurch das Druckereierzeugnis sicher und zuverlässig gehalten ist. Die Haltevorrichtung ist dabei vorzugsweise quer zur Förderrichtung F verlaufend angeordnet, Greifer- oder klammerartig gestaltet und erstreckt sich vorzugsweise über eine Längskantenlänge des Quer zur Förderrichtung gesehen längsten zu bearbeitenden Druckereierzeugnisses. In den vorliegenden Figuren wurden die Haltevorrichtungen zugunsten einer verbesserten Übersicht nicht dargestellt.

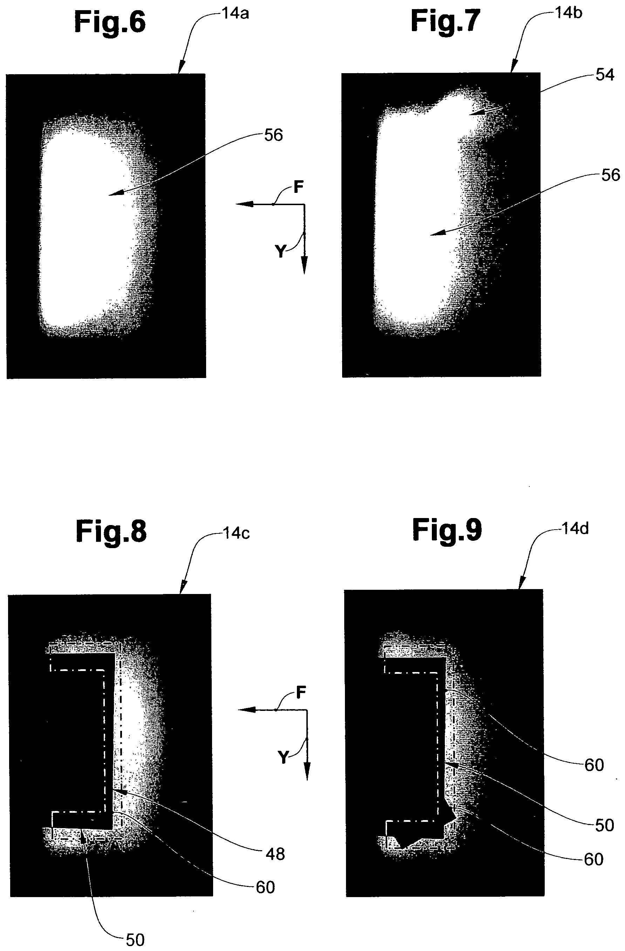

Oberhalb des Fördermittels 2 ist zur Erfassung eines Schattenbildes 14 ein optischer Sensor 16 angeordnet, welcher zu Kommunikationszwecken mit einer Signalleitung 18 verbunden ist. Bezüglich dieses Schattenbildes 14 und weiterer Schattenbilder sei an dieser Stelle auf die Figuren 6 bis 11 verwiesen. Im Versuchsbetrieb wurde ein sogenannter Low-Cost Vision Sensor mit einem M12-Objektiv mit acht Millimetern Brennweite als optischer Sensor 16 eingesetzt. Die Verarbeitung des Schattenbildes 14 erfolgte dabei mit einem "embedded digital signal Processor" vom Typ Blackfin ADSP mit 1000MMACS (nicht gezeigt), welcher über eine (ebenfalls nicht gezeigte) Eingabe-/Ausgabeschnittstelle (I/O-Schnittstelle) mit einem Leitsystem (ebenfalls nicht gezeigt) verbunden ist. Die Bilderfassung des optischen Sensors erfolgt vorzugsweise entsprechend dem Maschinentakt, also dem Fördertakt der Förderabteile 6 des Fördermittels 2 in der Förderrichtung F.

Der optische Sensor 16 beziehungsweise sein mit einer strich-doppelpunktenen Linie dargestellter Aufnahmebereich 20 sind mit einer lichtundurchlässigen Abschirmung 22 gegen Aussen abgeschirmt, damit kein unerwünschtes Umgebungslicht die Qualität des Schattenbildes 14 beeinträchtigt. In der Figur 1 ist die Abschirmung 22 im Schnitt dargestellt, um den Blick auf die Sensoranordnung freizugeben. Die Abschirmung 22 kann in den weiteren Ausführungsformen der Vorrichtung zwar ebenfalls enthalten sein, sie ist jedoch zur Verbesserung der Übersichtlichkeit nicht mehr dargestellt.

Zwischen den zwei Trumen des umlaufenden Endlosfördermittels 2, von denen im Ausschnitt von Figur 1 lediglich ein Förderabteil 6 des oberen Trums 24 zu sehen ist, ist ein durch drei Leuchtstoffröhren 26 gebildetes Leuchtmittel 28 angeordnet. Beim Versuchsbetrieb dienten drei konstant leuchtende 36-Watt-Leuchtstoffröhren mit elektronischem Vorschaltgerät als Leuchtmittel 28. Das Leuchtmittel 28 ist bei dieser Ausführungsform identisch mit einer Kontrastlichtquelle 30. Prinzipiell erlaubt dieser Aufbau eine ideale Anordnung des optischen Sensors 16 und der Kontrastlichtquelle 30 auf einer gemeinsamen Licht- bzw. Erfassungs-Achse. Ein weiterer Vorteil im Vergleich zu herkömmlichen Positionserfassungssystemen liegt darin, dass eine zeitaufwändige Feinausrichtung des optischen Sensors 16 und des Leuchtmittels 28 entfällt, da sie für die Erfassung und Auswertung der Druckerzeugnisposition verhältnismässig unkritisch sind.

Um eine Homogenisierung des vom Leuchtmittel 28 ausgestrahlten Lichts bzw. Kontrastlichts 34 herbeizuführen, sowie um die Lichtmenge gezielter zu nutzen ist unter den quer zur Förderrichtung F ausgerichten Leuchtstoffröhren 26 ein Reflektor 32 angeordnet, welcher das von den Leuchtstoffröhren 26 ausgehende Licht bei Bedarf in Richtung des Fördermittels umlenkt, so dass es als Kontrastlicht 34 nutzbar ist. Der Reflektor 32 kann in den weiteren Ausführungsformen der Vorrichtung zwar ebenfalls enthalten sein, er ist jedoch zur Verbesserung der Übersichtlichkeit nicht mehr dargestellt.

Bei der in Figur 1 gezeigten Vorrichtung 1 ist im Bereich einer in Förderrichtung F gesehen nachlaufenden Ecke des ersten Teilproduktes eine zusätzliche Kontrastlichtquelle 36 in Form eines Spots angeordnet.

Auf der Auflagefläche 8 des Förderabteils 6 liegt ein Druckereierzeugnis 10 bestehend aus einem ersten Teilprodukt 38, auf welchem ein zweites Teilprodukt 40 angeordnet ist. Beide Teilprodukte 38, 40 liegen dabei in Richtung der Förderrichtung F an einem Wandabschnitt 42 des Förderabteils 6 an.

Die in **Figur 2** gezeigte zweite Vorrichtung 1a entspricht bis auf das Fördermittel derjenigen von Figur 1, weshalb nicht näher auf deren Aufbau eingegangen wird und gleiche Elemente mit den identischen Referenznummern versehen sind. Im Unterschied zum in Figur 1 gezeigten Fördermittel 2 ist der in Figur 2 gezeigte Abschnitt des Fördermittels 2a zur Verbesserung der Lichtdurchlässigkeit regelmässig perforiert und daher vereinfacht gepunktet dargestellt. Die Perforation 44 ist dabei lochblechförmig, das heisst mit jeweils gegeneinander versetzten Lochreihen ausgebildet.

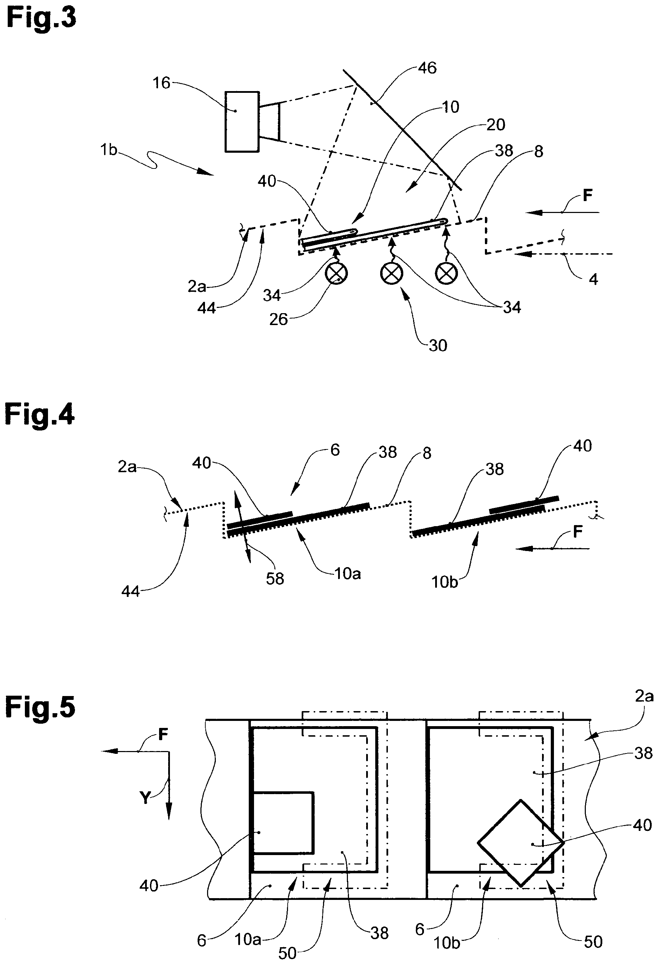

Eine dritte Ausführungsform der Vorrichtung 1b ist in **Figur 3** gezeigt, welche mit Ausnahme der Schattenbilderfassung derjenigen der Figur 2 entspricht. Im Unterschied zur in der Figur 2 gezeigten direkten Erfassung des Schattenbildes 14 des entsprechenden Druckereiproduktes 10 durch den optischen Sensor 16, erfasst der Sensor 16 beim in der Figur 3 gezeigten Aufbau das Schattenbild 14 indirekt über einen Umlenkspiegel 46.

Anhand der nachfolgenden Figuren 4 bis 13 wird eine Erfassung und Weiterverarbeitung des Schattenbildes 14 erläutert. Die Erläuterung der Funktion beschränkt sich dabei nicht nur auf ein perforiertes Fördermittel, da sie ebenso auf transparente und/oder transluzente Fördermittel übertragbar ist.

In der **Figur 4** sind in Zusammenschau mit **Figur 5** zwei benachbarte Förderabteile 6 sichtbar. Der besseren Übersicht halber sind die Perforierungen der Förderabteile 6 des Fördermittels lediglich im *Querschnitt* der Figur 4, nicht jedoch im Grundriss der Figur 5 dargestellt. Während im linken Förderabteil 6 ein korrekt zusammengestelltes und relativ zur Auflagefläche 8 korrekt ausgerichtetes Druckereierzeugnis 10a liegt, befindet sich im in Förderrichtung gesehen nachlaufenden, rechts davon angeordneten Förderabteil 6 ein zwar korrekt zusammengestelltes Druckereierzeugnis, dessen erstes Teilprodukt 38 und zweites Teilprodukt 40 jedoch in unerwünschter Weise gegeneinander verschoben sind. Der besseren Lesbarkeit halber wird das korrekt zusammengestellte und relativ zur Auflagefläche 8 korrekt ausgerichtete Druckereierzeugnis nachfolgend als korrektes Druckereierzeugnis 10a und jedes andere Druckereiprodukt wie beispielsweise ein korrekt zusammengestelltes Druckereierzeugnis, dessen erste und zweite Teilprodukte 38, 40 entweder gegeneinander und/oder relativ zur Auflagefläche 8 in unerwünschter Weise verschoben sind nachfolgend als fehlerhaftes Druckereierzeugnis 10b bezeichnet. Die Förderrichtung des Fördermittels 2a ist dabei mit F bezeichnet, während sich eine nachlaufende Kante 48 der Druckereierzeugnisse 10a, 10b quer zur Förderrichtung F in Richtung Y erstreckt.

Ein kontrastreicher Bildausschnitt 50 bzw. Sollkontrastbereich des Schattenbildes umfasst dabei die quer zur Förderrichtung F verlaufende Längskante 48 des Druckereierzeugnisses und dessen an die nachlaufende Längskante 48 angrenzenden hinteren Bereiche der sich in Förderrichtung F erstreckenden Querkanten 52 (siehe auch die Figuren 8 und 9). Basierend auf dem kontrastreichen Bildausschnitt 50 errechnet die vorzugsweise im optischen Sensor 16 angeordnete Bildverarbeitungseinheit eine Kontur 60 der Druckereierzeugnisse 10, 10a, 10b. Basierend auf der Kontur 60 wird im vorliegenden Fall ein Steuersignal 62 erzeugt, über die Kommunikationsleitung 18 ausgegeben (siehe Figur 1) und zur späteren Ausschleusung fehlerhafter Druckereierzeugnisse 10b genutzt.

Das in der **Figur 6** dargestellte erste Schattenbild 14a bietet sich dem optischen Sensor 16 der Vorrichtung 1a gemäss Figur 2, wenn sich kein Druckereierzeugnis 10, 10a, 10b im Förderabteil 6 befindet.

Das in der **Figur 7** dargestellte zweite Schattenbild 14b bietet sich dem optischen Sensor 16 der Vorrichtung 1 gemäss Figur 1, wenn sich kein Druckereierzeugnis 10, 10a, 10b im Förderabteil 6 befindet. Die zusätzliche Kontrastlichtquelle 36 bildet einen hellen Beleuchtungsbereich 54, welcher partiell über einen Randbereich des von den Leuchtstoffröhren 26 erzeugten hellen Standardbeleuchtungsbereichs 56 hinausreicht, so dass ein wolkenförmiger Gesamtbeleuchtungsbereich entsteht. Nachfolgend wird nicht näher auf diese Ausführungsform eingegangen, da sie betreffend der Bilderfassung und Bildverarbeitung/ Bildweiterverarbeitung identisch zu den anderen Ausführungsformen der Vorrichtung ist.

Die **Figur 8** zeigt ein drittes Schattenbild 14c ausgehend von demjenigen der Figur 6, welches bei einem korrekten Druckereierzeugnis 10a entsteht. Im Unterschied dazu zeigt die Figur 9 ein viertes Schattenbild 14d ausgehend von demjenigen der Figur 7, welches bei einem bei einem fehlerhaften Druckereierzeugnis 10b entsteht. Die Figur 9 zeigt deutlich einen weiteren Vorteil der vorliegenden Erfindung auf. Für das Schattenbild 14d ist es nämlich unerheblich, in welcher Höhe 58 (siehe Figur 4) bezüglich des Druckereierzeugnisses 10b sich ein Fehler bzw. sich ein fehlerhaft ausgerichtetes Teilprodukt 38, 40 befindet, da lediglich unterschieden wird, ob das ganze Druckereierzeugnis insgesamt korrekt oder fehlerhaft ist. Weiter geht aus der **Figur 9** hervor, dass selbst bei dünnen Teilprodukten, wie beispielsweise zweiten Teilprodukten 40, welche aufgrund ihrer Beschaffenheit teillichtdurchlässig sind, ein verhältnismässig kontrastreiches Schattenbild 14d erzielbar ist. Es ist denkbar, dass bei besonders dünnen Teilprodukten die Lichtstärke der Kontrastlichtquelle entsprechend angepasst wird, so dass trotzdem ein kontrastreiches Schattenbild 14 erreichbar ist. Auf eine weitere Variante zur Kontrasterhöhung des Schattenbildes wird nachfolgend noch detailliert eingegangen werden.

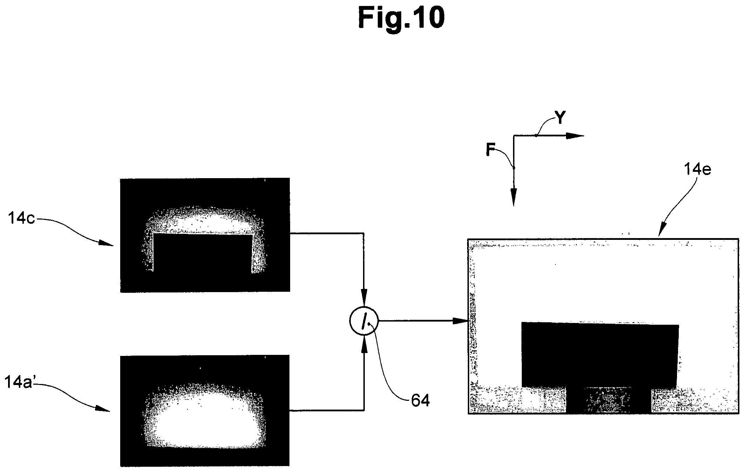

Anhand der **Figur 10** wird eine Homogenisierung der Helligkeit erklärt. Mit einer Homogenisierfunktion 64 wird in der Bildverarbeitungseinheit, vorzugsweise derjenigen des optischen Sensors 16, ein Referenzbild 14a', welches wie das Schattenbild 14a aussieht und deshalb eine korrespondierende Referenznummer trägt, vom Schattenbild 14c subtrahiert. Die daraus resultierende Differenz wird nachfolgend als abgeglichenes Schattenbild 14e bezeichnet. Das abgeglichene Schattenbild 14e weist im Vergleich mit dem Schattenbild 14c einen deutlicheren Kontrastverlauf auf. Das abgeglichene Schattenbild 14e von Figur 10 bildet dabei eine ideale Basis für den kontrastreichen Bildausschnitt 50, da es lediglich schwarze und weisse Bildpunkte bzw. Pixel aufweist, welche jeweils durch eine Ein-Bit-Information darstellbar und weiterverarbeitbar sind.

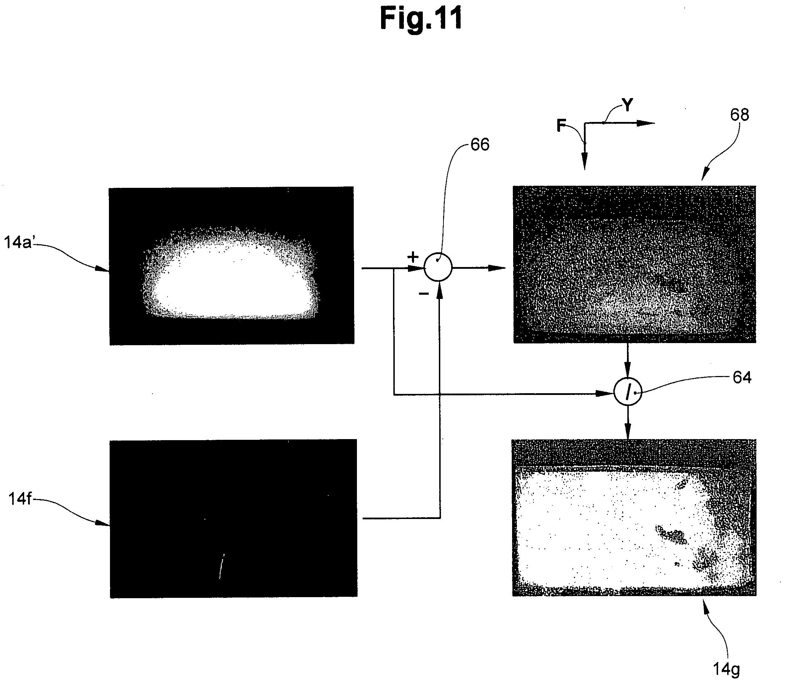

Die **Figur 11** zeigt eine bildmässige Darstellung der Herstellung eines kontrastreichen Schattenbildes anhand eines aufgrund eines lichtdurchlässigen Druckereierzeugnisses entstandenen kontrastarmen Schattenbildes 14f. Das lichtdurchlässige Druckereierzeugnis wurde dabei durch einen teiltransparenten Einzelbogen gebildet. Mittels einer Differenzfunktion 66 wird in der Bildverarbeitungseinheit, vorzugsweise derjenigen des optischen Sensors, das kontrastarme Schattenbild 14f vom Referenzbild 14a' subtrahiert. Aus der Differenzfunktion 66 geht ein Differenzbild 68 hervor. Dieses Differenzbild 68 wird anschliessend mit der oben beschriebenen Homogenisierfunktion 64 in der Bildverarbeitungseinheit mittels Subtraktion des Referenzbildes 14a' vom Differenzbild 68 in ein Negativschattenbild 14g umgewandelt. Die Differenzfunktion 66 und die Homogenisierfunktion 64 werden bevorzugt gleich in einem Prozessor des optischen Sensors 16 ausgeführt. Das Negativschattenbild 14g entspricht bezüglich seiner weiteren Bildweiterverarbeitung einem abgeglichenen Schattenbild, weshalb auf eine gesonderte Erklärung der Bildweiterverarbeitung für das Negativschattenbild 14g verzichtet werden kann.

### Bezugszeichenliste

- 1, 1a, 1b: Vorrichtung
- 2, 2a: Fördermittel
- 4: Förderbahn
- 6: Förderabteil
- 8: Auflagefläche
- 10, 10a, 10b: Druckereierzeugnis
- 14, 14a, 14b, 14c, 14d, 14f: Schattenbild
- 14a': Referenzbild
- 14e, 14g: abgeglichenes Schattenbild
- 16: Optischer Sensor
- 18: Kommunikationsleitung
- 20: Aufnahmebereich
- 22: Abschirmung
- 24: Oberes Trum
- 26: Leuchtstoffröhre
- 28: Leuchtmittel
- 30: Kontrastlichtquelle
- 32: Reflektor
- 34: Kontrastlicht
- 36: zus. Kontrastlichtquelle
- 38: erstes Teilprodukt
- 40: zweites Teilprodukt
- 42: Wandabschnitt
- 44: Perforation
- 46: Umlenkspiegel
- 48: nachlaufende Kante
- 50: kontrastreicher Bildausschnitt
- 52: Querkante
- 54: zus. Beleuchtungsbereich
- 56: Standardbeleuchtungsbereich
- 58: Höhe
- 60: Kontur
- 62: Steuersignal
- 64: Homogenisierfunktion
- 66: Differenzfunktion
- 68: Differenzbild
- F: Förderrichtung

## Patentansprüche

1. Verfahren zur optischen Erkennung der Position flächiger Druckereierzeugnisse (10, 10a, 10b), wobei die Druckereierzeugnisse (10, 10a, 10b) mit lichtdurchlässigen Fördermitteln (2, 2a) entlang einer Förderstrecke (4) zwischen mindestens einer Kontrastlichtquelle (30) und mindestens einem optischen Sensor (16) hindurchgeführt werden, **dadurch gekennzeichnet, dass** eine erste Seite der Druckereierzeugnisse (10, 10a, 10b) von der Kontrastlichtquelle (30) derart mit homogenisiertem Kontrastlicht angestrahlt wird, dass jeweils ein Schattenbild (14, 14a, 14b, 14c, 14d, 14f) des Druckereierzeugnisses entsteht, welches vom optischen Sensor (16) erfasst wird.

2. Verfahren gemäss Anspruch 1, **dadurch gekennzeichnet, dass** zur Kontrasterhöhung der Schattenbilder (14, 14a, 14b, 14c, 14d, 14f) Teilbereiche (54), insbesondere Eckbereiche der Druckereierzeugnisse (10, 10a, 10b) zusätzlich mit Kontrastlicht (34) angestrahlt werden.

3. Verfahren gemäss einem der Ansprüche 1 oder 2, **dadurch gekennzeichnet, dass** zur Homogenisierung von Schattenbildern (14c, 14f) Differenzbilder (14e, 68) erzeugt werden, indem die Schattenbilder (14f) von einem Referenzbild (14a') subtrahiert werden oder indem ein Referenzbild (14a') von den Schattenbildern (14c) subtrahiert wird.

4. Verfahren gemäss Anspruch 3, **dadurch gekennzeichnet, dass** die Differenzbilder (68) kontrastschwacher Schattenbilder (14f) zur Kontrasterhöhung homogenisiert werden, indem von ihnen Referenzbilder (14a') subtrahiert werden, so dass abgeglichene Schattenbilder (14g) gebildet werden.

5. Verfahren gemäss einem der Ansprüche 1 bis 4, **dadurch gekennzeichnet, dass** nur ein kontrastreicher Bildausschnitt (50) der Schattenbilder (14, 14a, 14b, 14c, 14d) beziehungsweise der abgeglichenen Schattenbilder (14e, 14g) für eine anschliessende Bildverarbeitung verwendet wird.

6. Verfahren gemäss Anspruch 5, **dadurch gekennzeichnet, dass** basierend auf dem kontrastreichen Bildausschnitt (50) eine Kontur (60) der Druckereierzeugnisse (10, 10a, 10b) errechnet wird, wobei die Kontur (60) vorzugsweise in einer Bildverarbeitungseinheit des optischen Sensors (16) errechnet wird.

7. Verfahren gemäss Anspruch 6, **dadurch gekennzeichnet, dass** basierend auf der Kontur (60) ein Steuersignal (62) erzeugt wird, wobei das Steuersignal (62) vorzugsweise eine Sonderbehandlung der betreffenden Druckereierzeugnisse (10b) in oder nach der Förderstrecke (4) bewirkt.

8. Verfahren gemäss einem der Ansprüche 1 bis 7, **dadurch gekennzeichnet, dass** die Kontrastlichtquelle (30) homogenisiertes Kontrastlicht (34) ausstrahlt.

9. Verfahren gemäss einem der Ansprüche 1 bis 8, **dadurch gekennzeichnet, dass** das Druckereierzeugnis (10, 10a, 10b) durch das Fördermittel (2a) hindurch von der Kontrastlichtquelle (30) angestrahlt wird.

10. Vorrichtung (1, 1a, 1b) zur optischen Erkennung der Position flächiger Druckereierzeugnisse (10, 10a, 10b), wobei die Vorrichtung (1, 1a, 1b) lichtdurchlässige Fördermittel (2, 2a) zum Bewegen der Druckereierzeugnisse (10, 10a, 10b) entlang einer Förderstrecke (4) zwischen mindestens einer Kontrastlichtquelle (30) und mindestens einem optischen Sensor (16) hindurch aufweist, **dadurch gekennzeichnet, dass** Fördermittel (2, 2a), Kontrastlichtquelle (30) und optischer Sensor (16) derart angeordnet sind, dass eine erste Seite der Druckereierzeugnisse (10, 10a, 10b) von der Kontrastlichtquelle (30) derart mit homogenisiertem Kontrastlicht angestrahlt wird, dass jeweils ein Schattenbild (14, 14a, 14b, 14c, 14d, 14f) des Druckereierzeugnisses entsteht, welches vom optischen Sensor (16) erfasst wird.

11. Vorrichtung gemäss Anspruch 10, **dadurch gekennzeichnet, dass** die Fördermittel (2, 2a) zumindest partiell lichtdurchlässig sind und zumindest teilweise zwischen der Kontrastlichtquelle (30) und dem optischen Sensor (16) durchführbar sind.

12. Vorrichtung gemäss Anspruch 10 oder 11, **dadurch gekennzeichnet, dass** die Fördermittel (2, 2a) Förderabteile (6), Auflageebenen oder Greifer umfassen, wobei die Fördermittel (2, 2a) vorzugsweise eine Vielzahl von Förderabteilen aufweist, die ihrerseits eine Perforation (44) aufweisen und/oder transluzent und/oder transparent sind.

13. Vorrichtung gemäss einem der Ansprüche 10 bis 12, **dadurch gekennzeichnet, dass** die Kontrastlichtquelle (30) ein mit Hilfe von Lichtreflektoren (32) homogenisiertes Kontrastlicht (34) eines Leuchtmittels (28) umfasst.

14. Vorrichtung gemäss einem der Ansprüche 10 bis 13, **dadurch gekennzeichnet, dass** zwischen den Druckereierzeugnissen (10, 10a, 10b) und optischem Sensor (16) und/oder Kontrastlichtquelle (30) mindestens ein Umlenkspiegel (46) angeordnet ist.

15. Vorrichtung gemäss einem der Ansprüche 10 bis 14, **dadurch gekennzeichnet, dass** der optische Sensor (16) gegen Umgebungslicht abgeschirmt ist.

## Claims

1. Method for optical detection of the position of flat printed products (10, 10a, 10b), wherein the printed products (10, 10a, 10b) are transported by translucent conveyor means (2, 2a) along a conveying section (4) between at least one contrast lighting source (30) and at least one optical sensor (16), **characterized in that** a first side of the printed products (10, 10a, 10b) is illuminated with homogenized contrast lighting by the contrast lighting source (30) in such manner that a shadowgraph (14, 14a, 14b, 14c, 14d, 14f) is created of each printed product, which is captured by the optical sensor (16).

2. Method according to Claim 1, **characterized in that** in order to increase the contrast of the shadowgraphs (14, 14a, 14b, 14c, 14d, 14f) subregions (54), particularly corner regions of the printed products (10, 10a, 10b) are illuminated with additional contrast lighting (34).

3. Method according to any one of Claims 1 or 2, **characterized in that** in order to homogenize shadowgraphs (14c, 14f) differential images (14e, 68) are generated by subtracting the shadowgraphs (14f) from a reference image (14a') or by subtracting a reference image (14a') from the shadowgraphs (14c).

4. Method according to Claim 3, **characterized in that** the differential images(68) of weakly contrasted shadowgraphs (14f) are homogenized to increase the contrast by subtracting reference images (14a') therefrom so that balanced shadowgraphs (14g) are formed.

5. Method according to any one of Claims 1 to 4, **characterized in that** only a high-contrast image section (50) of the shadowgraphs (14, 14a, 14b, 14c, 14d) or of the balanced shadowgraphs (14e, 14g) is used for subsequent image processing.

6. Method according to claim 5, **characterized in that** a contour (60) of the printed products (10, 10a, 10b) is calculated on the basis of the high-contrast image section (50), wherein the contour (60) is preferably calculated in an image processing unit of the optical sensor (16).

7. Method according to Claim 6, **characterized in that** a control signal (62) is generated on the basis of the contour (60), wherein the control signal (62) preferably initiates special treatment of the printed products (10b) affected in or after the conveying section (4).

8. Method according to any one of Claims 1 to 7, **characterized in that** the contrast lighting source (30) emits homogenized contrast light (34).

9. Method according to any one of Claims 1 to 8, **characterized in that** the printed product (10, 10a, 10b) is illuminated by the contrast lighting source (30) through the conveyor means (2a).

10. Device (1a, 1b, 1c) for optical detection of the position of flat printed products (10, 10a, 10b), wherein the device (1a, 1b, 1c) includes translucent conveyor means (2, 2a) for transporting the printed products (10, 10a, 10b) along a conveying section (4) between at least one contrast lighting source (30) and at least one optical sensor (16), **characterized in that** conveyor means (2, 2a), contrast lighting source (30) and optical sensor (16) are arranged in such manner that a first side of the printed products (10, 10a, 10b) is illuminated with homogenized contrast light by the contrast lighting source (30) such that a shadowgraph (14, 14a, 14b, 14c, 14d, 14f) of each printed product is created and is captured by the optical sensor (16).

11. Device according to Claim 10, **characterized in that** the conveyor means (2, 2a) are at least partially translucent and can pass at least partially between the contrast lighting source (30) and the optical sensor (16).

12. Device according to Claim 10 or 11, **characterized in that** the conveying means (2, 2a) comprises conveying compartments (6), support surfaces or grabs, wherein the conveying means (2, 2a) preferably include a plurality of conveying compartments which in turn have a perforation (44) and/or are translucent and/or transparent.

13. Device according to any one of Claims 10 to 12, **characterized in that** the contrast lighting source (30) comprises contrast light (34) from an illuminant (28) which is homogenized with the aid of light reflectors (32).

14. Device according to any one of Claims 10 to 13, **characterized in that** at least one deflecting mirror (46) is arranged between the printed products (10, 10a, 10b) and the optical sensor (16) and/or contrast lighting source (30).

15. Device according to any one of Claims 10 to 14, **characterized in that** the optical sensor (16) is shielded from ambient light.

## Revendications

1. Procédé de reconnaissance optique de la position de produits d'imprimerie plats (10, 10a, 10b), dans lequel les produits d'imprimerie (10, 10a, 10b) sont guidés avec des moyens de transport translucides (2, 2a) le long d'une voie de transport (4) entre au moins une source de lumière contrastée (30) et au moins un capteur optique (16), **caractérisé en ce que** un premier côté des produits d'imprimerie(10, 10a, 10b) est illuminé à partir de la source de lumière contrastée (30) avec une lumière contrastée homogénéisée de telle sorte que respectivement une image ombroscopique (14, 14a, 14b, 14c, 14d, 14f) du produit d'imprimerie soit générée, qui est détectée par le capteur optique (16).

2. Procédé selon la revendication 1, **caractérisé en ce que** à des fins d'augmentation du contraste des images ombroscopiques (14, 14a, 14b, 14c, 14d, 14f), des zones partielles (54), notamment des zones de coin des produits d'imprimerie (10, 10a, 10b) sont en outre illuminées avec une lumière contrastée (34).

3. Procédé selon une des revendications 1 ou 2, **caractérisé en ce que** à des fins d'homogénéisation des images ombroscopiques (14c, 14d) des images de différence (14e, 68) sont générées, en soustrayant les images ombroscopiques (14f) d'une image de référence (14a') ou en soustrayant une image de référence (14a') des images ombroscopiques (14c).

4. Procédé selon la revendication 3, **caractérisé en ce que** les images de différence (68) des images ombroscopiques à faible contraste (14f) sont homogénéisées à des fins d'augmentation de contraste, en soustrayant de celle-ci des images de référence (14a'), de sorte que des images ombroscopiques ajustées (14g) soient formées.

5. Procédé selon une des revendications 1 à 4, **caractérisé en ce que** seulement une section d'image très contrastée (50) des images ombroscopiques (14, 14a, 14b, 14c, 14d) respectivement des images ombroscopiques ajustées (14e, 14g) est utilisée pour un traitement d'images consécutif.

6. Procédé selon la revendication 5, **caractérisé en ce que** sur la base de la section d'image très contrastée (50) un contour (60) des produits d'imprimerie (10, 10a, 10b) soit calculé, dans lequel le contour (60) est calculé de préférence dans une unité de traitement d'image du capteur optique (16).

7. Procédé selon la revendication 6, **caractérisé en ce que** sur la base du contour (60) un signal de commande (62) est généré, dans lequel le signal de commande (62) provoque de préférence un traitement spécial des produits d'imprimerie concernés (10b) dans ou après la voie de transport (4).

8. Procédé selon une des revendications 1 à 7, **caractérisé en ce que** la source de lumière contrastée (30) émet une lumière contrastée homogénéisée (34).

9. Procédé selon une des revendications 1 à 8, **caractérisé en ce que** le produit d'imprimerie (10, 10a, 10b) est illuminé par la source de lumière contrastée (30) à travers le moyen de transport (2a).

10. Dispositif (1, 1a, 1b) de reconnaissance optique de la position de produits d'imprimerie plats (10, 10a, 10b), dans lequel le dispositif (1, 1a, 1b) présente des moyens de transport translucides (2, 2a) pour déplacer les produits d'imprimerie (10, 10a, 10b) le long d'une voie de transport (4) entre au moins une source de lumière contrastée (30) et au moins un capteur optique (16), **caractérisé en ce que** des moyens de transport (2, 2a), une source de lumière contrastée (30) et un capteur optique (16) sont disposés de telle sorte qu'un premier côté des produits d'imprimerie (10, 10a, 10b) soit illuminé par la source de lumière contrastée (30) avec une lumière contrastée homogénéisée, de telle sorte que respectivement une image ombroscopique (14, 14a, 14b, 14c, 14d, 14f) du produit d'imprimerie soit générée, qui est détectée par le capteur optique (16).

11. Dispositif selon la revendication 10, **caractérisé en ce que** les moyens de transport (2, 2a) sont au moins partiellement translucides et peuvent être mis en oeuvre au moins partiellement entre la source de lumière contrastée (30) et le capteur optique (16).

12. Dispositif selon la revendication 10 ou 11, **caractérisé en ce que** les moyens de transport (2, 2a) comprennent des sections de transport (6), des plans d'appui ou des organes de prévention, dans lequel le moyen de transport (2, 2a) présente de préférence une pluralité de sections de transport, qui présentent de leur côté une perforation (44) et/ou sont translucides et/ou transparentes.

13. Dispositif selon une des revendications 10 à 12, **caractérisé en ce que** la source de lumière contrastée (30) comprend une lumière contrastée homogénéisée (34) à l'aide de réflecteurs de lumière (32) d'une source lumineuse (28).

14. Dispositif selon une des revendications 10 à 13, **caractérisé en ce que** entre les produits d'imprimerie (10, 10a, 10b) et le capteur optique (16) et/ou la source de lumière contrastée (30) au moins un miroir de renvoi (46) est disposé.

15. Dispositif selon une des revendications 10 à 14, **caractérisé en ce que** le capteur optique (16) est protégé contre la lumière ambiante.
